(19) Europäisches Patentamt
European Patent Office
Office européen des brevets

(11) EP 3 356 011 B1

(12) **EUROPÄISCHE PATENTSCHRIFT**

(45) Veröffentlichungstag und Bekanntmachung des Hinweises auf die Patenterteilung:
**29.06.2022 Patentblatt 2022/26**

(21) Anmeldenummer: **16762799.1**

(22) Anmeldetag: **07.09.2016**

(51) Internationale Patentklassifikation (IPC):
***B01D 53/14*** *(2006.01)* ***C10L 3/10*** *(2006.01)*

(52) Gemeinsame Patentklassifikation (CPC):
**B01D 53/1493; B01D 53/1468; C10L 3/102; C10L 3/103; C10L 3/104;** B01D 2252/20431; B01D 2252/20436; B01D 2252/20442; B01D 2252/20478; B01D 2252/504; B01D 2256/245; C10L 2290/542

(86) Internationale Anmeldenummer:
**PCT/EP2016/071073**

(87) Internationale Veröffentlichungsnummer:
**WO 2017/055040 (06.04.2017 Gazette 2017/14)**

(54) **ZYKLISCHE AMINE ZUR SELEKTIVEN ENTFERNUNG VON SCHWEFELWASSERSTOFF**
CYCLIC AMINES FOR SELECTIVE CAPTURE OF HYDROGEN SULPHIDE
AMINES CYCLIQUES POUR L'ÉLIMINATION SÉLECTIVE DE SULFURE D'HYDROGÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2015 EP 15187385**

(43) Veröffentlichungstag der Anmeldung:
**08.08.2018 Patentblatt 2018/32**

(73) Patentinhaber: **BASF SE**
**67056 Ludwigshafen am Rhein (DE)**

(72) Erfinder:
- **INGRAM, Thomas**
  **67056 Ludwigshafen (DE)**
- **SIEDER, Georg**
  **67056 Ludwigshafen (DE)**
- **KATZ, Torsten**
  **67056 Ludwigshafen (DE)**
- **VORBERG, Gerald**
  **67056 Ludwigshafen (DE)**
- **NOTZ, Ralf**
  **67056 Ludwigshafen (DE)**

(56) Entgegenhaltungen:
**WO-A1-2012/168095**
**WO-A1-2013/167367**
**DE-A1-102005 043 142**
**US-A1- 2005 202 967**
**US-A1- 2013 118 350**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 356 011 B1

## Beschreibung

Die vorliegende Erfindung betrifft die Verwendung zyklischer Amine zur selektiven Entfernung von Schwefelwasserstoff gegenüber Kohlendioxid, ein Absorptionsmittel und ein Verfahren zur selektiven Entfernung von Schwefelwasserstoff gegenüber Kohlendioxid.

Die Entfernung von Sauergasen, wie z. B. $CO_2$, $H_2S$, $SO_2$, $CS_2$, HCN, COS oder Merkaptanen, aus Fluidströmen wie Erdgas, Raffineriegas oder Synthesegas, ist aus unterschiedlichen Gründen von Bedeutung. Der Gehalt an Schwefelverbindungen von Erdgas muss durch geeignete Aufbereitungsmaßnahmen unmittelbar an der Erdgasquelle reduziert werden, denn die Schwefelverbindungen bilden in dem vom Erdgas häufig mitgeführten Wasser Säuren, die korrosiv wirken. Für den Transport des Erdgases in einer Pipeline oder die Weiterverarbeitung in einer Erdgasverflüssigungsanlage (LNG = liquefied natural gas) müssen daher vorgegebene Grenzwerte der schwefelhaltigen Verunreinigungen eingehalten werden. Darüber hinaus sind zahlreiche Schwefelverbindungen bereits in niedrigen Konzentrationen übel riechend und toxisch.

Kohlendioxid muss unter anderem aus Erdgas entfernt werden, weil eine hohe Konzentration an $CO_2$ bei einer Verwendung als Pipeline- oder Sales Gas den Brennwert des Gases reduziert. Außerdem kann $CO_2$ in Verbindung mit Feuchtigkeit, die in den Fluidströmen häufig mitgeführt wird, zu Korrosion an Leitungen und Armaturen führen. Eine zu geringe Konzentration an $CO_2$ ist hingegen ebenfalls unerwünscht, da dadurch der Brennwert des Gases zu hoch sein kann. Üblicherweise liegen die $CO_2$-Konzentrationen für Pipeline- oder Sales Gas zwischen 1,5 und 3,5 Vol.-%.

Zur Entfernung von Sauergasen werden Wäschen mit wässrigen Lösungen anorganischer oder organischer Basen eingesetzt. Beim Lösen von Sauergasen in dem Absorptionsmittel bilden sich mit den Basen Ionen. Das Absorptionsmittel kann durch Entspannen auf einen niedrigeren Druck und/oder Strippen regeneriert werden, wobei die ionischen Spezies zu Sauergasen zurück reagieren und/oder mittels Dampf ausgestrippt werden. Nach dem Regenerationsprozess kann das Absorptionsmittel wiederverwendet werden.

Ein Verfahren, bei dem alle sauren Gase, insbesondere $CO_2$ und $H_2S$, weitestgehend entfernt werden, wird als "Total-Absorption" bezeichnet. In bestimmten Fällen kann es dagegen wünschenswert sein, bevorzugt $H_2S$ vor $CO_2$ zu absorbieren, z. B. um ein Brennwert-optimiertes $CO_2/H_2S$-Verhältnis für eine nachgeschaltete Claus-Anlage zu erhalten. In diesem Fall spricht man von einer "selektiven Wäsche". Ein ungünstiges $CO_2/H_2S$-Verhältnis kann die Leistung und Effizienz der Claus-Anlage durch Bildung von $COS/CS_2$ und Verkokung des Claus-Katalysators oder durch einen zu geringen Heizwert beeinträchtigen.

Die selektive Entfernung von Schwefelwasserstoff findet vielfach Anwendung bei Fluidströmen mit niedrigen Sauergas-Partialdrücken, wie z. B. in Tailgas oder bei der Sauergasanreicherung (Acid Gas Enrichment, AGE), beispielsweise zur Anreicherung von $H_2S$ vor dem Claus-Prozess.

Auch bei der Erdgasaufbereitung (Natural Gas Treatment) für Pipelinegas kann eine selektive Entfernung von $H_2S$ gegenüber $CO_2$ erwünscht sein. In vielen Fällen strebt man bei der Erdgasaufbereitung eine gleichzeitige Entfernung von $H_2S$ und $CO_2$ an, wobei vorgegebene $H_2S$-Grenzwerte eingehalten werden müssen, aber eine vollständige Entfernung von $CO_2$ nicht erforderlich ist. Die für Pipelinegas typische Spezifikation erfordert eine Sauergasentfernung auf etwa 1,5 bis 3,5 Vol.-% $CO_2$ und weniger als 4 vppm $H_2S$. In diesen Fällen ist eine maximale $H_2S$-Selektivität nicht erwünscht.

Stark sterisch gehinderte sekundäre Amine, wie 2-(2-tert-Butylaminoethoxy)ethanol (TBAEE), und tertiäre Amine, wie Methyldiethanolamin (MDEA), zeigen kinetische Selektivität für $H_2S$ gegenüber $CO_2$. Diese Amine reagieren nicht direkt mit $CO_2$; vielmehr wird $CO_2$ in einer langsamen Reaktion mit dem Amin und mit Wasser zu Bicarbonat umgesetzt - im Gegensatz dazu reagiert $H_2S$ in wässrigen Aminlösungen sofort. Derartige Amine eignen sich daher insbesondere für eine selektive Entfernung von $H_2S$ aus Gasgemischen, die $CO_2$ und $H_2S$ enthalten.

Insbesondere Absorptionsmittel auf Basis von MDEA sind in der Praxis weit verbreitet. Die $H_2S$-Selektivität eines Absorptionsmittels hängt von den Sauergas-Partialdrücken und -Beladungen ab. Bei niedrigen Sauergas-Partialdrücken zeigt MDEA beispielsweise gegenüber TBAEE eine schlechtere $H_2S$-Selektivität.

Auch zyklische sekundäre Amine, wie Piperidin-Derivate, kommen in der Gaswäsche zur Anwendung. Die WO 2012/062830 A1, WO 2013/167367 A1, WO 2010/089257 A1, WO 2012/168094 A1, WO 2012/168095 A1 und WO 2012/168067 A1 beschreiben wässrige Absorptionsmedien, umfassend Piperidin-Derivate, zur Sauergas-Absorption aus einem Gasgemisch. Die selektive Entfernung von Schwefelwasserstoff wird nicht diskutiert. In der US 2005/0202967 A1 werden Antioxidantien wie zyklische Piperin-Derivate für die Sauergaswäsche verwendet.

Die US 2014/0079613 A1 beschreibt ein wässriges Absorptionsmedium, umfassend ein zyklisches Amin mit ausschließlich tertiären Aminogruppen und ein zyklisches Amin, umfassend wenigstens eine sterisch ungehinderte Aminogruppe, zur Sauergas-Absorption aus einem Gasgemisch. Die DE 10 2005 043 142 A1 beschreibt ein wässriges Absorptionsmittel, enthaltend ein Polyamin mit mindestens zwei primären, sekundären oder tertiären Aminogruppen und ein aliphatisches oder cycloaliphatisches Amin. Auch diese Schriften beschreiben keine selektive $H_2S$-Entfernung.

Der Erfindung liegt die Aufgabe zu Grunde, weitere Amine, Absorptionsmittel und Verfahren zur selektiven Abtrennung von Schwefelwasserstoff und Kohlendioxid aus einem Fluidstrom bereitzustellen. Absorptionsmittel auf

Basis der Amine sollen hohe Selektivität, hohe Beladbarkeit und gute Regenerierbarkeit aufweisen.

In einem ersten Aspekt betrifft die Erfindung die Verwendung eines Amins der Formel (I)

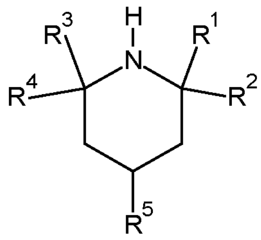

(I)

worin

$R^1$, $R^2$, R3 und $R^4$ für Methyl stehen;
$R^5$ ausgewählt ist unter $NR^6R^7$ und $OR^{10}$;
$R^6$ ausgewählt ist unter $C_1$-$C_5$-Alkyl und $C_2$-$C_5$-Hydroxyalkyl und $R^7$ ausgewählt ist unter $C_1$-$C_5$-Alkyl und $C_2$-$C_5$-Hydroxyalkyl; und
$R^{10}$ ausgewählt ist unter Wasserstoff, $C_1$-$C_5$-Alkyl und $C_2$-$C_5$-Hydroxyalkyl;
zur selektiven Entfernung von Schwefelwasserstoff gegenüber Kohlendioxid aus einem Fluidstrom durch Inkontaktbringen des Fluidstroms mit einem das Amin der Formel (I) enthaltendem Absorptionsmittel in einem Absorber, wobei:

$$\frac{\frac{mol(H_2S)}{mol(CO_2)} im\ beladenen\ Absorptionsmittel\ am\ Sumpf\ des\ Absorbers}{\frac{mol(H_2S)}{mol(CO_2)}\ im\ Fluidstrom} > 1,$$

wobei das Absorptionsmittel eine wässrige Lösung ist und die Konzentration des Amins der Formel (I) in der wässrigen Lösung 10 bis 60 Gew.-% beträgt;.

In einem weiteren Aspekt betrifft die Erfindung ein Verfahren zur selektiven Entfernung von Schwefelwasserstoff gegenüber Kohlendioxid aus einem Fluidstrom, bei dem man den Fluidstrom mit einem Absorptionsmittel in Kontakt bringt, welches ein Amin der obigen Formel (I) umfasst, wobei das Absorptionsmittel eine wässrige Lösung ist und die Konzentration des Amins der Formel (I) in der wässrigen Lösung 10 bis 60 Gew.-% beträgt, und wobei man einen behandelten Fluidstrom und ein beladenes Absorptionsmittel erhält; wobei:

$$\frac{\frac{mol(H_2S)}{mol(CO_2)} im\ beladenen\ Absorptionsmittel\ am\ Sumpf\ des\ Absorbers}{\frac{mol(H_2S)}{mol(CO_2)}\ im\ Fluidstrom} > 1.$$

In einem weiteren Aspekt betrifft die Erfindung außerdem ein Absorptionsmittel zur selektiven Entfernung von Schwefelwasserstoff aus einem Kohlendioxid und Schwefelwasserstoff enthaltenden Fluidstrom, welches umfasst

a) ein Amin der Formel (Ia)

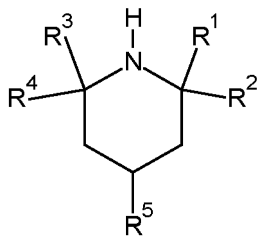

(Ia)

worin

$R^1$, $R^2$, $R^3$ und $R^4$ für Methyl stehen;
$R^5$ für $OR^{10}$ steht; und
$R^{10}$ ausgewählt ist unter Wasserstoff, $C_1$-$C_5$-Alkyl und $C_2$-$C_5$-Hydroxyalkyl; und

b) ein tertiäres Amin und/oder ein stark sterisch gehindertes Amin, wobei unter einer starken sterischen Hinderung ein tertiäres Kohlenstoffatom in unmittelbarer Nachbarschaft zu einem primären oder sekundären Stickstoffatom verstanden wird;

wobei das Absorptionsmittel eine wässrige Lösung ist und die Konzentration des Amins der Formel (Ia) in der wässrigen Lösung 10 bis 60 Gew.-% beträgt.

Bevorzugt ist das Amin a) 4-Hydroxy-2,2,6,6-tetramethylpiperidin. Bevorzugt ist das Amin b) ausgewählt unter Methyldiethanolamin (MDEA) und 2-(2-tert-Butylaminoethoxy)ethanol (TBAEE).

Soweit aus dem Kontext nicht anders ersichtlich, gelten die folgenden Ausführungen für die erfindungsgemäße Verwendung, die erfindungsgemäßen Absorptionsmittel, das erfindungsgemäße Verfahren und das erfindungsgemäße Amin.

$R^1$, $R^2$, $R^3$ und $R^4$ stehen für Methyl.

$C_1$-$C_5$-Alkyl steht bevorzugt für Methyl oder Ethyl; $C_2$-$C_5$-Hydroxyalkyl steht bevorzugt für 2-Hydroxyethyl; $C_3$-$C_5$-Alkyl, das über ein sekundäres oder tertiäres Kohlenstoffatom an ein Stickstoffatom gebunden ist, steht bevorzugt für Isopropyl (2-Propyl) oder tert-Butyl (2-Methyl-2-propyl).

Die Amine der Formel (I) weisen eine hohe thermische und chemische Stabilität auf. Der Substituent $R^5$ beeinflusst sowohl das Ausmaß der $H_2S$-Selektivität als auch die Wasserlöslichkeit. So kann mittels geeigneter Wahl des Substituenten $R^5$ ein für die jeweilige Trennaufgabe optimales Absorptionsmittel zur Entfernung von Schwefelwasserstoff aus einem Fluidstrom gewählt werden.

Bei den Aminen der allgemeinen Formel (I) handelt es sich um Verbindungen, die eine sterisch gehinderte sekundäre Aminogruppe und gegebenenfalls eine oder mehrere tertiäre Aminogruppen und/oder weitere sterisch gehinderte sekundäre Aminogruppen umfassen. Derartige Verbindungen können Schwefelwasserstoff deprotonieren und ionische Produkte bilden. Die Verbindungen reagieren nicht direkt mit $CO_2$, sondern nur in einer langsamen Umprotonierung in Gegenwart eines Protononendonors wie Wasser. Dadurch wird eine kinetische Selektivität der Entfernung von $H_2S$ gegenüber $CO_2$ erreicht.

Das sekundäre Ring-Stickstoffatom des Amins der Formel (I) ist aufgrund der Reste $R^1$, $R^2$, $R^3$ und $R^4$ an den direkt benachbarten Kohlenstoffatomen sterisch gehindert. Unter einer sterischen Hinderung einer sekundären Aminogruppe wird die Anwesenheit mindestens eines acyclischen sekundären oder tertiären Kohlenstoffatoms in unmittelbarer Nachbarschaft zum Stickstoffatom der Aminogruppe verstanden.

Unter einem sekundären Kohlenstoffatom wird ein Kohlenstoffatom, welches außer der Bindung zur sterisch gehinderten Position zwei Kohlenstoff-Kohlenstoff-Bindungen aufweist, verstanden. Unter einem tertiären Kohlenstoffatom wird ein Kohlenstoffatom, welches außer der Bindung zur sterisch gehinderten Position drei Kohlenstoff-Kohlenstoff-Bindungen aufweist, verstanden. Unter einem sekundären Amin wird eine Verbindung mit einem Stickstoffatom, welches mit zwei von Wasserstoff verschiedenen organischen Resten substituiert ist, verstanden.

In einer Ausführungsform steht $R^5$ für $NR^6R^7$; worin $R^6$ für $C_1$-$C_5$-Alkyl oder $C_2$-$C_5$-Hydroxyalkyl steht und $R^7$ für $C_1$-$C_5$-Alkyl oder $C_2$-$C_5$-Hydroxyalkyl steht. Exemplarische Vertreter sind:

4-(N,N-Dimethylamino)-2,2,6,6-tetramethylpiperidin,
4-(N,N-Diethylamino)-2,2,6,6-tetramethylpiperidin,
4-(N,N-Di-(3'-hydroxypropyl)amino)-2,2,6,6-tetramethylpiperidin,
4-(N,N-Di-(4'-hydroxybutyl)amino)-2,2,6,6-tetramethylpiperidin,
4-Isopropylamino-2,2,6,6-tetramethylpiperidin,
4-(tert-Butylamino)-2,2,6,6-tetramethylpiperidin und
4-(Di-(2-hydroxyethyl)amino)-2,2,6,6-tetramethylpiperidin.

In einer Ausführungsform steht $R^5$ für $OR^{10}$. Exemplarische Vertreter sind:

4-Hydroxy-2,2,6,6-tetramethylpiperidin (TAAol),
4-Ethoxy-2,2,6,6-tetramethylpiperidin,
4-Propoxy-2,2,6,6-tetramethylpiperidin,
4-Butoxy-2,2,6,6-tetramethylpiperidin,
4-(2'-Hydroxyethoxy)-2,2,6,6-tetramethylpiperidin,
4-(3'-Hydroxypropoxy)-2,2,6,6-tetramethylpiperidin, und
4-(4'-Hydroxybutoxy)-2,2,6,6-tetramethylpiperidin.

Am meisten bevorzugt sind 4-(N,N-Dimethylamin)-2,2,6,6-tetramethylpiperidin (DATP). 4-Hydroxy-2,2,6,6-tetramethylpiperidin (TAAol), 4-(tert-Butylamino)-2,2,6,6-tetramethylpiperidin und 4-(Di-(2-hydroxyethyl)amino)-2,2,6,6-tetramethylpiperidin.

Amine der Formel (I) sind im Allgemeinen zu mindestens 5 Gew.-%, besonders bevorzugt mindestens 10 Gew.-% und ganz besonders bevorzugt mindestens 15 Gew.-% in Wasser löslich.

Die Amine der allgemeinen Formel (I) zeigen eine ausgeprägte Temperaturabhängigkeit des pKs-Wertes. Dies hat zur Folge, dass bei relativ niedrigeren Temperaturen, wie sie im Absorptionsschritt herrschen, der höhere pKs-Wert die effiziente Sauergas-Absorption fördert, während bei relativ höheren Temperaturen, wie sie im Desorptionsschritt herrschen, der niedrigere pKs-Wert die Freisetzung der absorbierten Sauergase unterstützt. Es wird erwartet, dass eine große pKs-Wertdifferenz des Amins der allgemeinen Formel (I) zwischen Absorptions- und Desorptionstemperatur eine niedrigere Regenerationsenergie bedingt.

Die pKs-Werte werden geeigneter Weise in wässriger Lösung mit einer AminKonzentration von 0,01 bis 0,05 mol/kg bei der angegebenen Temperatur durch Bestimmung des pH-Werts am Halbäquivalenzpunkt gemessen, wie beispielsweise anhand der Ausführungsbeispiele gezeigt.

In einer Ausführungsform wird das Amin der Formel (I) in Kombination mit einem tertiären Amin und/oder stark sterisch gehindertem Amin verwendet bzw. umfasst das Absorptionsmittel neben dem Amin der Formel (I) ein tertiäres Amin oder stark sterisch gehindertes Amin. Das tertiäre Amin bzw. das stark sterisch gehinderte Amin ist vom Amin der Formel (I) verschieden. Unter einer starken sterischen Hinderung wird ein tertiäres Kohlenstoffatom in unmittelbarer Nachbarschaft zu einem primären oder sekundären Stickstoffatom verstanden.

Die Konzentration des Amins der Formel (I) in der wässrigen Lösung beträgt 10 bis 60 Gew.-%, bevorzugt 20 bis 50 Gew.-%, besonders bevorzugt 30 bis 50 Gew.-%. Umfasst das Absorptionsmittel neben dem Amin der Formel (I) außerdem ein von dem Amin der Formel (I) verschiedenes Amin, so beträgt die Gesamtkonzentration der Amine in der wässrigen Lösung bevorzugt 10 bis 60 Gew.-%, besonders bevorzugt 20 bis 50 Gew.-%, ganz besonders bevorzugt 30 bis 50 Gew.-%.

Das molare Verhältnis von Amin der allgemeinen Formel (I) zu von dem Amin der Formel (I) verschiedenen Amin liegt vorzugsweise im Bereich von 0,05 bis 1,0, vorzugsweise 0,1 bis 0,9.

Zu den geeigneten, von den Aminen der allgemeinen Formel (I) verschiedenen tertiären Aminen zählen insbesondere:

1. Tertiäre Alkanolamine wie
Bis(2-hydroxyethyl)-methylamin (Methyldiethanolamin, MDEA), Tris(2-hydroxyethyl)amin (Triethanolamin, TEA), Tributanolamin, 2-Diethylaminoethanol (Diethylethanolamin, DEEA), 2-Dimethylaminoethanol (Dimethylethanolamin, DMEA), 3-Dimethylamino-1-propanol (N,N-Dimethylpropanolamin), 3-Diethylamino-1-propanol, 2-Diisopropylaminoethanol (DIEA), N,N-Bis(2-hydroxypropyl)methylamin (Methyldiisopropanolamin, MDIPA);

2. Tertiäre Aminoether wie
3-Methoxypropyldimethylamin;

3. Tertiäre Polyamine, z. B. bistertiäre Diamine wie

N,N,N',N'-Tetramethylethylendiamin, N,N-Diethyl-N',N'-dimethylethylendiamin, N,N,N',N'-Tetraethylethylendiamin, N,N,N',N'-Tetramethyl-1,3-propandiamin (TMPDA), N,N,N',N'-Tetraethyl-1,3-propandiamin (TEPDA), N,N,N',N'-Tetramethyl-1,6-hexandiamin, N,N-Dimethyl-N',N'-diethylethylendiamin (DMDEEDA), 1-Dimethylamino-2-dimethylaminoethoxyethan (Bis[2-(dimethylamino)ethyl]ether), 1,4-Diazabicyclo[2.2.2]octan (TEDA), Tetramethyl-1,6-hexandiamin;

und Gemische davon.

Tertiäre Alkanolamine, d. h. Amine mit wenigstens einer an das Stickstoffatom gebundenen Hydroxyalkylgruppe, sind im Allgemeinen bevorzugt. Besonders bevorzugt ist Methyldiethanolamin (MDEA).

Zu den geeigneten, von den Aminen der allgemeinen Formel (I) verschiedenen stark sterisch gehinderten Aminen (also Aminen, welche ein tertiäres Kohlenstoffatom in unmittelbarer Nachbarschaft zu einem primären oder sekundären Stickstoffatom aufweisen) zählen insbesondere:

1. Stark sterisch gehinderte sekundäre Alkanolamine wie
2-(2-tert-Butylaminoethoxy)ethanol (TBAEE), 2-(2-tert-Butylamino)-propoxyethanol, 2-(2-tert-Amylaminoethoxy)ethanol, 2-(2-(1-Methyl-1-ethylpropylamino)ethoxy)ethanol, 2-(tert-Butylamino)ethanol, 2-tert-Butylamino-1-propanol, 3-tert-Butylamino-1-propanol, 3-tert-Butylamino-1-butanol, und 3-Aza-2,2-dimethyl-1,6-hexandiol;

2. Stark sterisch gehinderte primäre Alkanolamine wie
2-Amino-2-methylpropanol (2-AMP); 2-Amino-2-ethylpropanol; und 2-Amino-2-propylpropanol;

3. Stark sterisch gehinderte Aminoether wie

1,2-Bis-(tert-butylaminoethoxy)-ethan, Bis-(tert-butylaminoethyl)-ether;

und Gemische davon.

Stark sterisch gehinderte sekundäre Alkanolamine sind im Allgemeinen bevorzugt. Besonders bevorzugt ist 2-(2-tert-Butylaminoethoxy)ethanol (TBAEE).

Bevorzugt enthält das Absorptionsmittel kein sterisch ungehindertes primäres Amin oder sterisch ungehindertes sekundäres Amin. Verbindungen dieser Art wirken als starke Aktivatoren der $CO_2$-Absorption. Dadurch kann die $H_2S$-Selektivität des Absorptionsmittels verloren gehen.

Unter einem sterisch ungehinderten primären Amin werden Verbindungen verstanden, die über primäre Aminogruppen verfügen, an die lediglich Wasserstoffatome oder primäre oder sekundäre Kohlenstoffatome gebunden sind. Unter einem sterisch ungehinderten sekundären Amin werden Verbindungen verstanden, die über sekundäre Aminogruppen verfügen, an die lediglich Wasserstoffatome oder primäre Kohlenstoffatome gebunden sind.

In einer Ausführungsform enthält das Absorptionsmittel wenigstens ein organisches Lösungsmittel. Es kann wünschenswert sein, den Wassergehalt des Absorptionsmittels zu begrenzen, z. B. auf maximal 40 Gew.-% oder maximal 30 Gew.-% oder maximal 20 Gew.-% oder maximal 10 Gew.-% oder maximal 5 Gew.-%, bezogen auf das Gewicht des Absorptionsmittels.

Das organische Lösungsmittel ist bevorzugt ausgewählt unter

$C_4$-$C_{10}$-Alkoholen, wie n-Butanol, n-Pentanol und n-Hexanol;

Ketonen, wie Cyclohexanon;

Estern, wie Essigsäureethylester und Essigsäurebutylester;

Lactonen, wie $\gamma$-Butyrolacton, $\delta$-Valerolacton und $\varepsilon$-Caprolacton;

Amiden, wie tertiären Carbonsäureamiden, beispielsweise N,N-Dimethylformamid; oder N-Formylmorpholin und N-Acetylmorpholin;

Lactamen, wie $\gamma$-Butyrolactam, $\delta$-Valerolactam und $\varepsilon$-Caprolactam und N-Methyl-2-pyrrolidon (NMP);

Sulfonen, wie Sulfolan;

Sulfoxiden, wie Dimethylsulfoxid (DMSO);

Diolen, beispielsweise Glycolen, wie Ethylenglycol (EG) und Propylenglycol;

Polyalkylenglycolen, wie Diethylenglycol (DEG) und Triethylenglycol (TEG);

Di- oder Mono-($C_{1-4}$-Alkylether)-glycolen, wie Ethylenglycoldimethylether;

Di- oder Mono-($C_{1-4}$-Alkylether)-polyalkylenglycolen, wie Diethylenglycoldimethylether, Dipropylenglycolmonomethylether und Triethylenglycoldimethylether;

cyclischen Harnstoffen, wie N,N-Dimethylimidazolidin-2-on und Dimethylpropylenharnstoff (DMPU);

Thioalkanolen, wie Ethylendithioethanol, Thiodiethylenglycol (Thiodiglycol, TDG) und Methylthioethanol;

und Gemischen davon.

Besonders bevorzugt ist das organische Lösungsmittel ausgewählt unter Sulfonen, Diolen, Di- oder Mono-($C_{1-4}$-Alkylether)-polyalkylenglycolen und Polyalkylenglycolen. Ganz besonders bevorzugt ist das organische Lösungsmittel

ausgewählt unter Sulfonen. Ein bevorzugtes organisches Lösungsmittel ist Sulfolan.

In einer Ausführungsform wird das Amin der Formel (I) im Kombination mit einer Säure mit einem pKs-Wert von weniger als 6, insbesondere weniger als 5 verwendet bzw. enthält das Absorptionsmittel wenigstens eine Säure mit einem pKs-Wert von weniger als 6, insbesondere weniger als 5. Bei Säuren mit mehreren Dissoziationsstufen und demzufolge mehreren $pK_S$-Werten ist diese Erfordernis erfüllt, wenn einer der $pK_S$-Werte im angegebenen Bereich liegt. Die Säure ist geeigneter Weise unter Protonensäuren (Brönstedt-Säuren) ausgewählt.

Die Säure wird bevorzugt in einer Menge zugegeben, so dass der bei 120 °C gemessene pH-Wert der wässrigen Lösung 7,9 bis weniger als 8,8 beträgt, vorzugsweise 8,0 bis weniger als 8,8, besonders bevorzugt 8,0 bis weniger als 8,5, ganz besonders bevorzugt 8,0 bis weniger als 8,2.

Zwischen der Säure und dem Amin der allgemeinen Formel (I) bildet sich ein Protonierungsgleichgewicht aus. Die Lage des Gleichgewichts ist temperaturabhängig und das Gleichgewicht ist bei höheren Temperaturen zum freien Oxoniumion und/oder dem Aminsalz mit der niedrigeren Protonierungsenthalpie verschoben. Es wird erwartet, dass eine große pKs-Wertdifferenz des Amins der allgemeinen Formel (I) zwischen Absorptions- und Desorptionstemperatur zusammen mit der Einstellung des pH-Werts mittels Säurezugabe eine besonders niedrige Regenerationsenergie bedingt.

Die Säure ist ausgewählt unter organischen und anorganischen Säuren. Geeignete organische Säuren umfassen beispielsweise Phosphonsäuren, Sulfonsäuren, Carbonsäuren und Aminosäuren. In bestimmten Ausführungsformen ist die Säure eine mehrbasische Säure.

Geeignete Säuren sind beispielsweise

Mineralsäuren, wie Salzsäure, Schwefelsäure, Amidoschwefelsäure, Phosphorsäure, Partialester der Phosphorsäure, z. B. Mono- und Dialkyl- und -arylphosphate wie Tridecylphosphat, Dibutylphosphat, Diphenylphosphat und Bis-(2-ethylhexyl)phosphat; Borsäure;

Carbonsäuren, beispielsweise gesättigte aliphatische Monocarbonsäuren wie Ameisensäure, Essigsäure, Propionsäure, Buttersäure, Isobuttersäure, Valeriansäure, Isovaleriansäure, Pivalinsäure, Capronsäure, n-Heptansäure, Caprylsäure, 2-Ethylhexansäure, Pelargonsäure, Neodecansäure, Undecansäure, Laurinsäure, Tridecansäure, Myristinsäure, Pentadecansäure, Palmitinsäure, Margarinsäure, Stearinsäure, Isostearinsäure, Arachinsäure, Behensäure; gesättigte aliphatische Polycarbonsäuren wie Oxalsäure, Malonsäure, Bernsteinsäure, Glutarsäure, Adipinsäure, Pimelinsäure, Korksäure, Azelainsäure, Sebacinsäure, Dodecandisäure; cycloaliphatische Mono- und Polycarbonsäuren wie Cyclohexancarbonsäure, Hexahydrophthalsäure, Tetrahydrophthalsäure, Harzsäuren, Naphthensäuren; aliphatische Hydroxycarbonsäuren wie Glykolsäure, Milchsäure, Mandelsäure, Hydroxybuttersäure, Weinsäure, Apfelsäure, Citronensäure; halogenierte aliphatische Carbonsäuren wie Trichloressigsäure oder 2-Chlorpropionsäure; aromatische Mono- und Polycarbonsäuren wie Benzoesäure, Salicylsäure, Gallussäure, die stellungsisomeren Tolylsäuren, Methoxybenzoesäuren, Chlorbenzoesäuren, Nitrobenzoesäuren, Phthalsäure, Terephthalsäure, Isophthalsäure; technische Carbonsäure-Gemische wie zum Beispiel Versatic-Säuren;

Sulfonsäuren, wie Methylsulfonsäure, Butylsulfonsäure, 3-Hydroxypropylsulfonsäure, Sulfoessigsäure, Benzolsulfonsäure, p-Toluolsulfonsäure, p-Xylolsulfonsäure, 4-Dodecylbenzolsulfonsäure, 1-Naphtalinsulfonsäure, Dinonylnaphthalinsulfonsäure und Dinonylnaphthalin- disulfonsäure, Trifluormethyl- oder Nonafluor-n-butylsulfonsäure, Camphersulfonsäure, 2-(4-(2-Hydroxyethyl)-1-piperazinyl)-ethansulfonsäure (HEPES);

organische Phosphonsäuren, beispielsweise Phosphonsäuren der Formel (II)

$$R^{11}\text{-}PO_3H \qquad (II)$$

worin $R^{11}$ für $C_1$-$C_{18}$-Alkyl steht, das gegebenenfalls durch bis zu vier Substituenten substituiert ist, die unabhängig ausgewählt sind unter Carboxy, Carboxamido, Hydroxy und Amino.

Hierzu zählen Alkylphosphonsäuren, wie Methylphosphonsäure, Propylphosphonsäure, 2-Methyl-propylphosphonsäure, t-Butylphosphonsäure, n-Butylphosphonsäure, 2,3-Dimethylbutylphosphonsäure, Octylphosphonsäure; Hydroxyalkylphosphonsäuren, wie Hydroxymethylphosphonsäure, 1-Hydroxyethylphosphonsäure, 2-Hydroxyethylphosphonsäure; Arylphosphonsäuren wie Phenylphosphonsäure, Toluylphosphonsäure, Xylylphosphonsäure, Aminoalkylphosphonsäuren wie Aminomethylphosphonsäure, 1-Aminoethylphosphonsäure, 1-Dimethylaminoethylphosphonsäure, 2-Aminoethylphosphonsäure, 2-(N-Methylamino)ethylphosphonsäure, 3-Aminopropylphosphonsäure, 2-Aminopropylphosphonsäure, 1-Aminopropylphosphonsäure, 1-Aminopropyl-2-chlorpropylphosphonsäure, 2-Aminobutylphosphonsäure, 3-Aminobutylphosphonsäure, 1-Aminobutylphosphonsäure, 4-Aminobutylphosphonsäure, 2-Aminopentylphosphonsäure, 5-Aminopentylphosphonsäure, 2-Aminohexylphosphonsäure, 5-Aminohexylphosphonsäure, 2-Aminooctylphosphonsäure, 1-Aminooctylphosphonsäure, 1-Aminobutylphosphonsäure; Amidoalkylphosphonsäuren wie 3-Hydroxymethylamino-3-oxopropylphosphonsäure; und Phosphonocarbonsäuren wie 2-Hydroxyphosphonoessigsäure und 2-Phosphonobutan-1,2,4-tricarbonsäure.;

Phosphonsäuren der Formel (III)

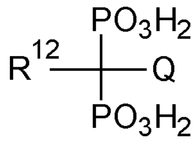

(III)

worin $R^{12}$ für H oder $C_1$-$C_6$-Alkyl steht, Q für H, OH oder $TL_2$ steht und T für H oder $CH_2PO_3H_2$ steht, wie 1-Hydroxyethan-1,1-diphosphonsäure;

Phosphonsäuren der Formel (IV)

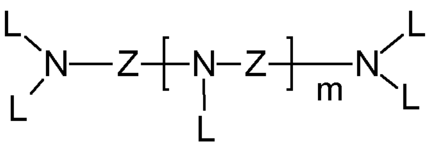

(IV)

worin Z für $C_2$-$C_6$-Alkylen, Cycloalkandiyl, Phenylen, oder $C_2$-$C_6$-Alkylen, das durch Cycloalkandiyl oder Phenylen unterbrochen ist, steht, L für $CH_2PO_3H_2$ steht und m für 0 bis 4 steht, wie Ethylendiamin-tetra(methylenphosphonsäure), Diethylentriamin-penta(methylenphosphonsäure) und Bis(hexamethylen)triamin-penta(methylen-phosphonsäure);

Phosphonsäuren der Formel (V)

$R^{13}$-$NA_2$ (V)

worin $R^{13}$ für $C_1$-$C_6$-Alkyl, $C_2$-$C_6$-Hydroxyalkyl oder A steht und A für $CH_2PO_3H_2$ steht, wie Nitrilo-tris(methylenphosphonsäure) und 2-Hydroxyethyliminobis(methylen-phosphonsäure);

Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, wie α-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie N,N-Dimethylglycin (Dimethylaminoessigsäure), N,N-Diethylglycin, Alanin (2-Aminopropionsäure), N-Methylalanin (2-(Methylamino)-propionsäure), N,N-Dimethylalanin, N-Ethylalanin, 2-Methylalanin (2-Aminoisobuttersäure), Leucin (2-Amino-4-methyl-pentan-1-säure), N-Methylleucin, N,N-Dimethyl-leucin, Isoleucin (1-Amino-2-methylpentansäure), N-Methylisoleucin, N,N-Dimethyl-isoleucin, Valin (2-Aminoisovaleriansäure), α-Methylvalin (2-Amino-2-methyl-isovaleriansäure), N-Methylvalin (2-Methylaminoisovaleriansäure), N,N-Dimethylvalin, Prolin (Pyrrolidin-2-carbonsäure), N-Methylprolin, N-Methylserin, N,N-Dimethylserin, 2-(Methylamino)-isobuttersäure, Piperidin-2-carbonsäure, N-Methyl-piperidin-2-carbonsäure,

β-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie 3-Dimethylaminopropionsäure, N-Methyliminodipropionsäure, N-Methyl-piperidin-3-carbonsäure,

γ-Aminosäuren mit tertiären Aminogruppen oder Aminogruppen, welche mindestens ein sekundäres oder tertiäres Kohlenstoffatom in unmittelbarer Nachbarschaft zur Aminogruppe aufweisen, wie 4-Dimethylaminobuttersäure,

oder Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, wie N-Methyl-piperidin-4-carbonsäure.

Unter den anorganischen Säuren sind Phosphorsäure und Schwefelsäure bevorzugt.

Unter den Carbonsäuren sind Ameisensäure, Essigsäure, Benzoesäure, Bernsteinsäure und Adipinsäure bevorzugt.

Unter den Sulfonsäuren sind Methansulfonsäure, p-Toluolsulfonsäure und 2-(4-(2-Hydroxyethyl)-1-piperazinyl)-ethansulfonsäure (HEPES) bevorzugt.

Unter den Phosphonsäuren sind 2-Hydroxyphosphonoessigsäure, 2-Phosphonobutan-1,2,4-tricarbonsäure, 1-Hydroxyethan-1,1-diphosphonsäure, Ethylendiamin-tetra-(methylenphosphonsäure), Diethylentriamin-penta(methylenphosphonsäure), Bis(hexamethylen)triamin-penta(methylenphosphonsäure) (HDTMP) und Nitrilo-tris(methylenphosphonsäure) bevorzugt, wovon 1-Hydroxyethan-1,1-diphosphonsäure besonders bevorzugt ist.

Unter den Aminocarbonsäuren mit tertiären Aminogruppen oder Aminogruppen, welche mindestens ein sekundäres oder tertiäres Kohlenstoffatom in unmittelbarer Nachbarschaft zur Aminogruppe aufweisen, sind N,N-Dimethylglycin und N-Methylalanin bevorzugt.

Besonders bevorzugt ist die Säure eine anorganische Säure.

Das Absorptionsmittel kann auch Additive, wie Korrosionsinhibitoren, Enzyme etc. enthalten. Im Allgemeinen liegt die Menge an derartigen Additiven im Bereich von etwa 0,01 bis 3,0 Gew.-% des Absorptionsmittels.

Lösungen des Amins der Formel (I) bzw. die Absorptionsmittel weisen vorzugsweise ein $H_2S$:$CO_2$-Beladbarkeitsverhältnis von mindestens 1, besonders bevorzugt mindestens 1,2, ganz besonders bevorzugt mindestens 2 und am meisten bevorzugt mindestens 3 auf.

Unter $H_2S$:$CO_2$-Beladbarkeitsverhältnis wird der Quotient aus der maximalen $H_2S$-Beladung durch die maximale $CO_2$-Beladung unter Gleichgewichtsbedingungen bei Beladung des Absorptionsmittels mit $CO_2$ bzw. $H_2S$ bei 40 °C und Umgebungsdruck (ca. 1 bar) verstanden. Geeignete Testmethoden sind in den Ausführungsbeispielen genannt. Das $H_2S$:$CO_2$-Beladbarkeitsverhältnis dient als Indiz für die zu erwartende $H_2S$-Selektivität; je höher das $H_2S$:$CO_2$-Beladbarkeitsverhältnis, desto höher die erwartete $H_2S$-Selektivität.

In einer bevorzugten Ausführungsform beträgt die maximale $H_2S$-Beladbarkeit der Lösungen der Amine der Formel (I) bzw. des Absorptionsmittels, wie in den Ausführungsbeispielen gemessen, mindestens 5 $Nm^3$/t, besonders bevorzugt mindestens 15 $Nm^3$/t, ganz besonders bevorzugt mindestens 25 $Nm^3$/t und am meisten bevorzugt mindestens 40 $Nm^3$/t.

Das erfindungsgemäße Verfahren ist geeignet zur Behandlung von Fluiden aller Art. Fluide sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids). Das erfindungsgemäße Verfahren ist besonders zur Behandlung von kohlenwasserstoffhaltigen Fluidströmen geeignet. Die enthaltenen Kohlenwasserstoffe sind z. B. aliphatische Kohlenwasserstoffe, wie $C_1$-$C_4$-Kohlenwasserstoffe, wie Methan, ungesättigte Kohlenwasserstoffe, wie Ethylen oder Propylen, oder aromatische Kohlenwasserstoffe wie Benzol, Toluol oder Xylol.

Das erfindungsgemäße Verfahren bzw. Absorptionsmittel ist zur Entfernung von $CO_2$ und $H_2S$ geeignet. Neben Kohlendioxid und Schwefelwasserstoff können andere saure Gase im Fluidstrom vorhanden sein, wie COS und Mercaptane. Außerdem können auch $SO_3$, $SO_2$, $CS_2$ und HCN entfernt werden.

Das erfindungsgemäße Verfahren eignet sich zur selektiven Entfernung von Schwefelwasserstoff gegenüber $CO_2$. Unter "Selektivität für Schwefelwasserstoff" wird vorliegend der Wert des folgenden Quotienten verstanden:

$$\frac{\frac{mol(H_2S)}{mol(CO_2)}\, in\ der Flüssigphase}{\frac{mol(H_2S)}{mol(CO_2)}\ in\ der\ Gasphase}$$

Bei einem üblichen Gaswächeverfahren ist die Flüssigphase das beladene Absorptionsmittel am Sumpf des Absorbers und die Gasphase der zu behandelnde Fluidstrom.

Ein Gaswächeverfahren wird als selektiv erachtet, wenn die Selektivität größer als 1 ist. Die Selektivität für Schwefelwasserstoff beträgt vorzugsweise mindestens 1,3, besonders bevorzugt mindestens 2, ganz besonders bevorzugt mindestens 3. Die angegebenen Selektivitätswerte stellen sich insbesondere auch bei Sauergasbeladungen (mol($CO_2$+$H_2S$)/mol(Amin)) von 0,2 oder höher bzw. 0,4 oder höher ein.

In einigen Fällen, beispielsweise bei der Entfernung von Sauergasen aus Erdgas zur Verwendung als Pipeline- oder Sales Gas, ist eine Totalabsorption von Kohlendioxid nicht erwünscht. In einer Ausführungsform beträgt der Restgehalt an Kohlendioxid im behandelten Fluidstrom mindestens 0,5 Vol.-%, bevorzugt mindestens 1,0 Vol.-% und besonders bevorzugt mindestens 1,5 Vol.-%.

In bevorzugten Ausführungsformen ist der Fluidstrom ein Kohlenwasserstoffe enthaltender Fluidstrom; insbesondere ein Erdgasstrom. Besonders bevorzugt enthält der Fluidstrom mehr als 1,0 Vol.-% Kohlenwasserstoffe, ganz besonders bevorzugt mehr als 5,0 Vol.-% Kohlenwasserstoffe, am meisten bevorzugt mehr als 15 Vol.-% Kohlenwasserstoffe.

Der Schwefelwasserstoff-Partialdruck im Fluidstrom beträgt üblicherweise mindestens 2,5 mbar. In bevorzugten Ausführungsformen liegt im Fluidstrom ein Schwefelwasserstoff-Partialdruck von mindestens 0,1 bar, insbesondere mindestens 1 bar, und ein Kohlendioxid-Partialdruck von mindestens 0,2 bar, insbesondere mindestens 1 bar, vor. Die angegebenen Partialdrücke beziehen sich auf den Fluidstrom beim erstmaligen Kontakt mit dem Absorptionsmittel im Absorptionsschritt.

In bevorzugten Ausführungsformen liegt im Fluidstrom ein Gesamtdruck von mindestens 1,0 bar, besonders bevorzugt mindestens 3,0 bar, ganz besonders bevorzugt mindestens 5,0 bar und am bevorzugtesten mindestens 20 bar vor. In bevorzugten Ausführungsformen liegt im Fluidstrom ein Gesamtdruck von höchstens 180 bar vor. Der Gesamtdruck bezieht sich auf den Fluidstrom beim erstmaligen Kontakt mit dem Absorptionsmittel im Absorptionsschritt.

Im erfindungsgemäßen Verfahren wird der Fluidstrom in einem Absorptionsschritt in einem Absorber in Kontakt mit dem Absorptionsmittel gebracht, wodurch Kohlendioxid und Schwefelwasserstoff zumindest teilweise ausgewaschen werden. Man erhält einen $CO_2$- und $H_2S$-abgereicherten Fluidstrom und ein $CO_2$- und $H_2S$-beladenes Absorptionsmittel.

Als Absorber fungiert eine in üblichen Gaswäscheverfahren eingesetzte Waschvorrichtung. Geeignete Waschvorrichtungen sind beispielsweise Füllkörper-, Packungs- und Bodenkolonnen, Membrankontaktoren, Radialstromwäscher, Strahlwäscher, Venturi-Wäscher und Rotations-Sprühwäscher, bevorzugt Packungs-, Füllkörper- und Bodenkolonnen, besonders bevorzugt Boden- und Füllkörperkolonnen. Die Behandlung des Fluidstroms mit dem Absorptionsmittel erfolgt dabei bevorzugt in einer Kolonne im Gegenstrom. Das Fluid wird dabei im Allgemeinen in den unteren Bereich und das Absorptionsmittel in den oberen Bereich der Kolonne eingespeist. In Bodenkolonnen sind Sieb-, Glocken- oder Ventilböden eingebaut, über welche die Flüssigkeit strömt. Füllkörperkolonnen können mit unterschiedlichen Formkörpern gefüllt werden. Wärme- und Stoffaustausch werden durch die Vergrößerung der Oberfläche aufgrund der meist etwa 25 bis 80 mm großen Formkörper verbessert. Bekannte Beispiele sind der Raschig-Ring (ein Hohlzylinder), Pall-Ring, Hiflow-Ring, Intalox-Sattel und dergleichen. Die Füllkörper können geordnet, aber auch regellos (als Schüttung) in die Kolonne eingebracht werden. Als Materialien kommen in Frage Glas, Keramik, Metall und Kunststoffe. Strukturierte Packungen sind eine Weiterentwicklung der geordneten Füllkörper. Sie weisen eine regelmäßig geformte Struktur auf. Dadurch ist es bei Packungen möglich, Druckverluste bei der Gasströmung zu reduzieren. Es gibt verschiedene Ausführungen von Packungen z. B. Gewebe- oder Blechpackungen. Als Material können Metall, Kunststoff, Glas und Keramik eingesetzt werden.

Die Temperatur des Absorptionsmittels beträgt im Absorptionsschritt im Allgemeinen etwa 30 bis 100 °C, bei Verwendung einer Kolonne beispielsweise 30 bis 70 °C am Kopf der Kolonne und 50 bis 100 °C am Boden der Kolonne.

Das erfindungsgemäße Verfahren kann einen oder mehrere, insbesondere zwei, aufeinander folgende Absorptionsschritte umfassen. Die Absorption kann in mehreren aufeinander folgenden Teilschritten durchgeführt werden, wobei das die sauren Gasbestandteile enthaltende Rohgas in jedem der Teilschritte mit jeweils einem Teilstrom des Absorptionsmittels in Kontakt gebracht wird. Das Absorptionsmittel, mit dem das Rohgas in Kontakt gebracht wird, kann bereits teilweise mit sauren Gasen beladen sein, d. h. es kann sich beispielsweise um ein Absorptionsmittel, das aus einem nachfolgenden Absorptionsschritt in den ersten Absorptionsschritt zurückgeführt wurde, oder um teilregeneriertes Absorptionsmittel handeln. Bezüglich der Durchführung der zweistufigen Absorption wird Bezug genommen auf die Druckschriften EP 0 159 495, EP 0 190 434, EP 0 359 991 und WO 00100271.

Der Fachmann kann einen hohen Abtrennungsgrad an Schwefelwasserstoff bei einer definierten Selektivität erreichen, indem er die Bedingungen im Absorptionsschritt, wie insbesondere das Absorptionsmittel/Fluidstrom-Verhältnis, die Kolonnenhöhe des Absorbers, die Art der kontaktfördernden Einbauten im Absorber, wie Füllkörper, Böden oder Packungen, und/oder die Restbeladung des regenerierten Absorptionsmittels variiert.

Ein niedriges Absorptionsmittel/Fluidstrom-Verhältnis führt zu einer erhöhten Selektivität, ein höheres Absorptionsmittel/Fluidstrom-Verhältnis führt zu einer unselektiveren Absorption. Da $CO_2$ langsamer absorbiert wird als $H_2S$, wird bei einer längeren Verweilzeit mehr $CO_2$ aufgenommen als bei einer kürzeren Verweilzeit. Eine höhere Kolonne bewirkt daher eine unselektivere Absorption. Böden oder Packungen mit größerem Flüssigkeits-Holdup führen ebenfalls zu einer unselektiveren Absorption. Über die bei der Regeneration eingebrachte Erwärmungsenergie kann die Restbeladung des regenerierten Absorptionsmittels eingestellt werden. Eine geringere Restbeladung des regenerierten Absorptionsmittels führt zu einer verbesserten Absorption.

Das Verfahren umfasst bevorzugt einen Regenerationsschritt, bei dem man das $CO_2$- und $H_2S$-beladene Absorptionsmittel regeneriert. Im Regenerationsschritt werden aus dem $CO_2$- und $H_2S$-beladenen Absorptionsmittel $CO_2$ und $H_2S$ und gegebenenfalls weitere saure Gasbestandteile freigesetzt, wobei ein regeneriertes Absorptionsmittel erhalten wird. Vorzugsweise wird das regenerierte Absorptionsmittel anschließend in den Absorptionsschritt zurückgeführt.

In der Regel umfasst der Regenerationsschritt wenigstens eine der Maßnahmen Erwärmung, Entspannung und Strippen mit einem inerten Fluid.

Der Regenerationsschritt umfasst bevorzugt eine Erwärmung des mit den sauren Gasbestandteilen beladenen Absorptionsmittels, z. B. mittels eines Aufkochers, Naturumlaufverdampfers, Zwangsumlaufverdampfers, oder Zwangsumlaufentspannungsverdampfers. Die absorbierten Sauergase werden dabei mittels des durch Erhitzens der Lösung gewonnenen Wasserdampfes abgestrippt. Anstelle des Dampfes kann auch ein inertes Fluid, wie Stickstoff, verwendet werden. Der absolute Druck im Desorber liegt normalerweise bei 0,1 bis 3,5 bar, bevorzugt 1,0 bis 2,5 bar. Die Temperatur liegt normalerweise bei 50 °C bis 170 °C, bevorzugt bei 80 °C bis 130 °C, wobei die Temperatur natürlich vom Druck abhängig ist.

Der Regenerationsschritt kann alternativ oder zusätzlich eine Druckentspannung umfassen. Diese beinhaltet mindestens eine Druckentspannung des beladenen Absorptionsmittels von einem hohen Druck, wie er bei der Durchführung des Absorptionsschritts herrscht, auf einen niedrigeren Druck. Die Druckentspannung kann beispielsweise mittels eines Drosselventils und/oder einer Entspannungsturbine geschehen. Die Regeneration mit einer Entspannungsstufe ist beispielsweise beschrieben in den Druckschriften US 4,537,753 und US 4,553,984.

Die Freisetzung der sauren Gasbestandteile im Regenerationsschritt kann beispielsweise in einer Entspannungskolonne, z. B. einem senkrecht oder waagerecht eingebauten Flash-Behälter oder einer Gegenstromkolonne mit Einbauten, erfolgen.

Bei der Regenerationskolonne kann es sich ebenfalls um eine Füllkörper-, Packungs- oder Bodenkolonne handeln. Die Regenerationskolonne weist am Sumpf einen Aufheizer auf, z. B. einen Zwangsumlaufverdampfer mit Umwälzpumpe. Am Kopf weist die Regenerationskolonne einen Auslass für die freigesetzten Sauergase auf. Mitgeführte Absorptionsmitteldämpfe werden in einem Kondensator kondensiert und in die Kolonne zurückgeführt.

Es können mehrere Entspannungskolonnen hintereinander geschaltet werden, in denen bei unterschiedlichen Drücken regeneriert wird. Beispielsweise kann in einer Vorentspannungskolonne bei hohem Druck, der typischerweise etwa 1,5 bar oberhalb des Partialdrucks der sauren Gasbestandteile im Absorptionsschritt liegt, und in einer Hauptentspannungskolonne bei niedrigem Druck, beispielsweise 1 bis 2 bar absolut, regeneriert werden. Die Regeneration mit zwei oder mehr Entspannungsstufen ist beschrieben in den Druckschriften US 4,537, 753, US 4,553, 984, EP 0 159 495, EP 0 202 600, EP 0 190 434 und EP 0 121 109.

Wegen der optimalen Abstimmung des Gehalts an den Aminkomponenten und der Säure weist das Absorptionsmittel eine hohe Beladbarkeit mit sauren Gasen auf, die auch leicht wieder desorbiert werden können. Dadurch können bei dem erfindungsgemäßen Verfahren der Energieverbrauch und der Lösungsmittelumlauf signifikant reduziert werden.

Für einen möglichst niedrigen Energiebedarf bei der Regeneration des Absorptionsmittels ist es von Vorteil, wenn eine möglichst große Differenz zwischen dem pH-Wert bei der Temperatur der Absorption und dem pH-Wert bei der Temperatur der Desorption vorliegt, da dies das Abtrennen der Sauergase vom Absorptionsmittel erleichtert.

Die Erfindung wird anhand der beigefügten Zeichnungen und der nachfolgenden Beispiele näher veranschaulicht.

Fig. 1 ist eine schematische Darstellung einer zur Durchführung des erfindungsgemäßen Verfahrens geeigneten Anlage.

Fig. 2 zeigt die $H_2S$-Selektivität von 4-Butylamino-2,2,6,6-tetramethylpiperidin (Butyl-TAD), 4-Dimethylamino-2,2,6,6-tetramethylpiperidin (DATP), Methyldiethanolamin (MDEA), 4-Amino-2,2,6,6-tetramethylpiperidin (TAD), und einer Mischung von 4-Hydroxy-2,2,6,6-tetramethylpiperidin und MDEA (TAAol + MDEA) und bei verschiedenen Sauergas-Beladungen.

Gemäß Fig. 1 wird über die Zuleitung Z ein geeignet vorbehandeltes, Schwefelwasserstoff und Kohlendioxid enthaltendes Gas in einem Absorber A1 mit regeneriertem Absorptionsmittel, das über die Absorptionsmittelleitung 1.01 zugeführt wird, im Gegenstrom in Kontakt gebracht. Das Absorptionsmittel entfernt Schwefelwasserstoff und Kohlendioxid durch Absorption aus dem Gas; dabei wird über die Abgasleitung 1.02 ein an Schwefelwasserstoff und Kohlendioxid abgereichertes Reingas gewonnen.

Über die Absorptionsmittelleitung 1.03, den Wärmetauscher 1.04, in dem das $CO_2$- und $H_2S$-beladene Absorptionsmittel mit der Wärme des über die Absorptionsmittelleitung 1.05 geführten, regenerierten Absorptionsmittels aufgeheizt wird, und die Absorptionsmittelleitung 1.06 wird das mit $CO_2$- und $H_2S$-beladene Absorptionsmittel der Desorptionskolonne D zugeleitet und regeneriert.

Zwischen Absorber A1 und Wärmetauscher 1.04 kann ein Entspannungsbehälter vorgesehen sein (in Fig. 1 nicht dargestellt) in dem das $CO_2$- und $H_2S$-beladene Absorptionsmittel auf z. B. 3 bis 15 bar entspannt wird.

Aus dem unteren Teil der Desorptionskolonne D wird das Absorptionsmittel in den Aufkocher 1.07 geführt, wo es erhitzt wird. Der hauptsächlich wasserhaltige Dampf wird in die Desorptionskolonne D zurückgeführt, während das

regenerierte Absorptionsmittel über die Absorptionsmittelleitung 1.05, den Wärmetauscher 1.04, in dem das regenerierte Absorptionsmittel das $CO_2$- und $H_2S$-beladene Absorptionsmittel aufheizt und selbst dabei abkühlt, die Absorptionsmittelleitung 1.08, den Kühler 1.09 und die Absorptionsmittelleitung 1.01 dem Absorber A1 wieder zugeführt wird. Anstelle des gezeigten Aufkochers können auch andere Wärmetauschertypen zur Erzeugung des Strippdampfes eingesetzt werden, wie ein Naturumlaufverdampfer, Zwangsumlaufverdampfer, oder Zwangsumlaufentspannungsverdampfer. Bei diesen Verdampfertypen wird ein gemischtphasiger Strom aus regeneriertem Absorptionsmittel und Strippdampf in den Sumpf der Desorptionskolonne D zurückgefahren, wo die Phasentrennung zwischen dem Dampf und dem Absorptionsmittel stattfindet. Das regenerierte Absorptionsmittel zum Wärmetauscher 1.04 wird entweder aus dem Umlaufstrom vom Sumpf der Desorptionskolonne D zum Verdampfer abgezogen, oder über eine separate Leitung direkt aus dem Sumpf der Desorptionskolonne D zum Wärmetauscher 1.04 geführt.

Das in der Desorptionskolonne D freigesetzte $CO_2$- und $H_2S$-haltige Gas verlässt die Desorptionskolonne D über die Abgasleitung 1.10. Es wird in einen Kondensator mit integrierter Phasentrennung 1.11 geführt, wo es von mitgeführtem Absorptionsmitteldampf getrennt wird. In dieser und allen andern zur Durchführung des erfindungsgemäßen Verfahrens geeigneten Anlagen können Kondensation und Phasentrennung auch getrennt voneinander vorliegen. Anschließend wird eine hauptsächlich aus Wasser bestehende Flüssigkeit über die Absorptionsmittelleitung 1.12 in den oberen Bereich der Desorptionskolonne D geführt, und ein $CO_2$- und $H_2S$-haltiges Gas über die Gasleitung 1.13 ausgeführt.

Beispiele

Es wurden folgende Abkürzungen verwendet:

| | |
|---|---|
| Butyl-TAD: | 4-Butylamino-2,2,6,6-tetramethylpiperidin |
| DATP: | 4-Dimethylamino-2,2,6,6-tetramethylpiperidin |
| MDEA: | Methyldiethanolamin |
| TAAol: | 4-Hydroxy-2,2,6,6-tetramethylpiperidin |
| TAD: | 4-Amino-2,2,6,6-tetramethylpiperidin |
| TBATP: | 4-(tert-Butylamino)-2,2,6,6-tetramethylpiperidin |

Angaben in Prozent beziehen sich generell auf Gew.-%.

Beispiel 1 - pKs-Werte

Die $pK_S$-Werte verschiedener Amine wurden mittels der Halbäquivalenzmethode bestimmt. Dazu wurden die Amine mit einer Konzentration von 0,01 bis 0,05 mol/L in Wasser gelöst und mit der halben molaren Menge an Salzsäure (0,005 bis 0,025 mol/l) teilneutralisiert. Die Masse der Aminlösungen betrug 250 g. Der gemessene pH-wert entsprach dem pKs-Wert. Die Messungen wurden bei 20 und 120 °C durchgeführt. Als pH-Elektrode wurde das Modell "Hamilton Polylite Plus 120" verwendet, welche mit Pufferlösungen pH 7 und pH 12 kalibriert wird. Die Messung erfolgte in einem thermostatisierten, geschlossenen Doppelmantelgefäß mit Stickstoffüberlagerung.

| Amin | pKs bei 20 °C | pKs bei 120 °C | $\Delta pK_S$ (120-20 °C) |
|---|---|---|---|
| MDEA* | 8,7 | 7,0 | 1,7 |
| DATP$^+$ | 10,7 | 8,1 | 2,6 |
| TAAol | 10,2 | 7,6 | 2,6 |
| * Vergleichsverbindung<br>$^+$ bei DATP wurde der erste pKs-Wert angegeben | | | |

Es wird erwartet, dass die große pKs-Wertdifferenz von DATP und TAAol zwischen Absorptions- und Desorptionstemperatur eine niedrigere Regenerationsenergie bedingt.

Beispiel 2 - Selektivität

In einen Glasreaktor mit Doppelmantel zur Thermostatisierung und Rührer (Rührgeschwindikgeit = 200 rpm) wurden ca. 200 mL unbeladenes wässriges Absorptionsmittel (TAAol + MDEA: TAAol: 0,77 M; MDEA: 0,63 M; restliche Absorptionsmittel: 1,4 M) vorgelegt. Am Kopf des Glaszylinders wurde ein Glaskühler aufgesetzt, welcher bei 5 °C

betrieben wurde. Dadurch wurde eine Verfälschung der Messergebnisse durch ein teilweises Verdampfen des Absorptionsmittels verhindert. Zur Bestimmung der Absorptionskapazität wurden bei Umgebungsdruck und 40 °C 216 Nl/h Sauergas (1,0 Vol.-% $H_2S$, 10 Vol.-% $CO_2$ und 89 Vol.-% $N_2$) über ein Tauchrohr durch die Absorptionsflüssigkeit geleitet. Dem Glasreaktor wurden in regelmäßigen Zeitabständen Proben entnommen und die Beladung an $CO_2$ bzw. $H_2S$ folgendermaßen bestimmt:

Die $H_2S$-Bestimmung erfolgte durch Titration mit Silbernitratlösung. Hierzu wurde die zu analysierende Probe in eine wässrige Lösung mit ca. 2 Gew.-% Natriumacetat und ca. 3 Gew.-% Ammoniak eingewogen. Anschließend wurde der $H_2S$ Gehalt durch eine potentiometrische Wendepunktstitration mittels Silbernitratlösung bestimmt. Am Wendepunkt ist $H_2S$ vollständig als $Ag_2S$ gebunden. Der $CO_2$-Gehalt wurde als Total Inorganic Carbon bestimmt (TOC-V Series Shimadzu).

Die Selektivität wurde berechnet als

$$\frac{\frac{mol(H_2S)}{mol(CO_2)}\, in\ derFlüssighase}{\frac{mol(H_2S)}{mol(CO_2)}\ in\ der\ Gasphase}$$

Die Ergebnisse sind in Fig. 2 dargestellt. Es ist ersichtlich, dass die Absorptionsmittel auf Basis von TAAol + MDEA und DATP insbesondere bei höheren Sauegas-Beladungen eine höhere Selektivität aufweisen als die Vergleichsbeispiele.

Beispiel 3 - Beladungs- und Strippversuch

In einen Glaszylinder mit Doppelmantel zur Thermostatisierung wurden ca. 100 mL unbeladenes Absorptionsmittel (30 Gew.-%) vorgelegt. Am Kopf des Glaszylinders wurde ein Glaskühler aufgesetzt, welcher bei 5 °C betrieben wurde. Dadurch wurde eine Verfälschung der Messergebnisse durch ein teilweises Verdampfen des Absorptionsmittels verhindert. Zur Bestimmung der Absorptionskapazität wurden bei Umgebungsdruck und 40 °C 8 Nl/h Sauergas $H_2S$ bzw. $CO_2$ über eine Fritte durch die Absorptionsflüssigkeit geleitet. Anschließend wurde die Beladung an $CO_2$ bzw. $H_2S$ wie in Beispiel 2 bestimmt.

Zum Strippen der beladenen Lösung wurde eine identisch aufgebaute Apparatur auf 80 °C aufgeheizt, das beladene Absorptionsmittel eingefüllt und mittels eines $N_2$-Stroms (8 Nl/h) gestrippt. Nach 60 min wurde eine Probe genommen und die $CO_2$- bzw. $H_2S$-Beladung des Absorptionsmittels wie in Beispiel 2 bestimmt.

Aus der Differenz der Beladung am Ende des Beladungsversuchs und der Beladung am Ende des Strippversuchs ergeben sich die jeweiligen zyklischen Kapazitäten. Die Ergebnisse sind in Tabelle 1 dargestellt.

Tabelle 1

| Absorptionsmittel | | $CO_2$-Beladung [$Nm^3/t$] | | Zyklische $CO_2$-Kapazität [$Nm^3/t$] | $H_2S$-Beladung [$Nm^3/t$] | | Zyklische $H_2S$-Kapazität [$Nm^3/t$] | $H_2S$: $CO_2$-Beladbarkeitsverhältnis |
|---|---|---|---|---|---|---|---|---|
| # | Zusammensetzung | nach Beladung | nach Strippung | | nach Beladung | nach Strippung | | |
| 3-1* | 30 Gew.-% MDEA + 70 Gew.-% Wasser | 43,4 | 2,7 | 40,7 | 38,7 | 6,7 | 32,0 | 0,79 |
| 3-2 | 30 Gew.-% DATP + 70 Gew.-% Wasser | 55,2 | 12,2 | 43,0 | 55,5 | 12,5 | 43,0 | 1,0 |
| 3-3 | 30 Gew.-% DATP + 70 Gew.-% Ethylenglycol | 28,8 | 4,6 | 24,2 | 39,9 | 7,0 | 32,9 | 1,36 |
| 3-4 | 30 Gew.-% DATP + 70 Gew.-% Triethylenglycol | 4,8 | 0,7 | 4,1 | 34,5 | 5,0 | 29,5 | 4,10 |

* Vergleichsbeispiel

Aus dem Vergleich der Beispiele 3-1 und 3-2 ist ersichtlich, dass DATP sowohl eine höhere $CO_2$- als auch eine höhere $H_2S$-Beladbarkeit und höhere zyklischen $CO_2$- bzw. $H_2S$-Kapazitäten aufweist. Es ist auch ein erhöhtes $H_2S$:$CO_2$-Beladbarkeitsverhältnis ersichtlich.

Es ist außerdem ersichtlich, dass nicht-wässrige Lösungsmittel verminderte $CO_2$- und $H_2S$-Beladbarkeit sowie niedrigere zyklischen $CO_2$- bzw. $H_2S$-Kapazitäten bewirken, jedoch eine höhere $H_2S$-Selektivität bedingen.

Beispiel 4 - pH-Gradient / Regenerationsenergie

Man bestimmte die Temperaturabhängigkeit des pH-Werts von wässrigen Aminlösungen bzw. teilneutralisierten Aminlösungen im Temperaturbereich von 50 °C bis 120 °C. Es wurde die pH-Elektrode Hamilton Polylite Plus 120 eingesetzt, die mit Pufferlösungen pH 7 und pH 12 kalibriert wird. Es wurde eine Druckapparatur mit Stickstoff-Überlagerung verwendet, in der der pH-Wert bis 120 °C gemessen werden kann.

In Tabelle 2 sind der pH (50°C), der pH(120°C) sowie die Differenz pH(50°C) - pH(120°C) für wässrige Zusammensetzungen angegeben. Es ist erkennbar, dass in den Beispielen, bei denen die wässrige Zusammensetzung Amin 4-Hydroxy-2,2,6,6-tetramethylpiperidin umfasst, eine größere Differenz zwischen den pH-Werten bei 50 und 120 °C vorliegt.

In einer Pilotanlage wurde für wässrige Absorptionsmittel die bei der Regeneration eingebrachte Erwärmungsenergie bei einer definierten $H_2S$-Konzentration des gereinigten Gases untersucht. Die Pilotanlage entsprach der Fig. 1. Im Absorber wurde eine strukturierte Packung verwendet. Es herrschte ein Druck von 60 bar. Die Packungshöhe im Absorber betrug 3,2 m bei einem Kolonnendurchmesser von 0,0531 m. Im Desorber wurde eine strukturierte Packung verwendet. Es herrschte ein Druck von 1,8 bar. Die Packungshöhe des Desorbers betrug 6,0 m bei einem Durchmesser von 0,085 m.

Ein Gasgemisch aus 93 Vol.-% $N_2$, 5 Vol.-% $CO_2$ und 2 Vol.-% $H_2S$ wurde mit einem Massenstrom von 47 kg/h und einer Temperatur von 40 °C in den Absorber geleitet. Im Absorber betrug die Absorptionsmittel-Umlaufrate von 60 kg/h. Die Temperatur des Absorptionsmittels betrug 50 °C. Die Regenerationsenergie wurde so eingestellt, dass eine $H_2S$-Konzentation von 5 ppm in dem gereinigten Gas erreicht wurde. Die Ergebnisse sind in Tabelle 3 dargestellt.

Tabelle 2

| Bsp. | wässrige Zusammensetzung | TAAol: MDEA ** | pH (50°C) | pH (120°C) | pH(50°C) - pH (120°C) |
|---|---|---|---|---|---|
| 4-1* | 40% MDEA | - | 11,01 | 9,58 | 1,43 |
| 4-2* | 40% MDEA + 0,5% $H_3PO_4$ | - | 9,76 | 8,29 | 1,47 |
| 4-3 | 35% MDEA + 10% 4-Hydroxy-2,2,6,6-tetramethylpiperidin + 0,4% $H_2SO_4$ | 0,22 | 10,23 | 8,62 | 1,61 |
| 4-4 | 35% MDEA + 10% 4-Hydroxy-2,2,6,6-tetramethylpiperidin + 0,9% $H_2SO_4$ | 0,22 | 9,87 | 8,21 | 1,66 |
| 4-5 | 35% MDEA + 10% 4-Hydroxy-2,2,6,6-tetramethylpiperidin + 1,2% $H_2SO_4$ | 0,22 | 9,68 | 8,03 | 1,65 |
| * Vergleichsbeispiel ** molares Verhältnis von 4-Hydroxy-2,2,6,6-tetramethylpiperidin zu MDEA | | | | | |

Tabelle 3

| Bsp. | wässrige Zusammensetzung | Relative Regenerationsenergie** [%] |
|---|---|---|
| 4-6* | 40% MDEA | 100,0 |
| 4-7* | 40% MDEA + 0,5% $H_3PO_4$ | 73,3 |
| 4-8 | 35% MDEA + 10% 4-Hydroxy-2,2,6,6-tetramethylpiperidin + 0,9% $H_2SO_4$ | 70,5 |
| 4-9 | 35% MDEA + 10% 4-Hydroxy-2,2,6,6-tetramethylpiperidin + 1,2% $H_2SO_4$ | 64,6 |
| * Vergleichsbeispiel ** relativ Beispiel 4-7* | | |

Es ist erkennbar, dass die wässrigen Zusammensetzungen, die 4-Hydroxy-2,2,6,6-tetramethylpiperidin umfassen, eine niedrigere erforderliche Regenerationsenergie aufweisen.

## Patentansprüche

1. Verfahren zur selektiven Entfernung von Schwefelwasserstoff gegenüber Kohlendioxid aus einem Fluidstrom, bei dem man den Fluidstrom in einem Absorber mit einem Absorptionsmittel in Kontakt bringt, welches ein Amin der Formel (I)

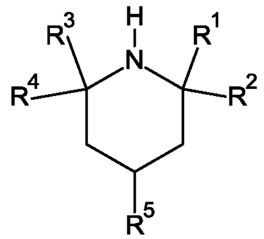

(I)

umfasst, worin

$R^1$, $R^2$, $R^3$ und $R^4$ für Methyl stehen;
$R^5$ ausgewählt ist unter $NR^6R^7$ und $OR^{10}$;
$R^6$ ausgewählt ist unter $C_1$-$C_5$-Alkyl und $C_2$-$C_5$-Hydroxyalkyl und $R^7$ ausgewählt ist unter $C_1$-$C_5$-Alkyl und $C_2$-$C_5$-Hydroxyalkyl; und
$R^{10}$ ausgewählt ist unter Wasserstoff, $C_1$-$C_5$-Alkyl und $C_2$-$C_5$-Hydroxyalkyl;
wobei das Absorptionsmittel eine wässrige Lösung ist und die Konzentration des Amins der Formel (I) in der wässrigen Lösung 10 bis 60 Gew.-% beträgt;
wobei man einen behandelten Fluidstrom und ein beladenes Absorptionsmittel erhält;
wobei:

$$\frac{\frac{mol(H_2S)}{mol(CO_2)}\, im\ beladenen\ Absorptionsmittel\ am\ Sumpf\ des\ Absorbers}{\frac{mol(H_2S)}{mol(CO_2)}\ im\ Fluidstrom} > 1.$$

2. Verfahren nach Anspruch 1, wobei $R^5$ für $NR^6R^7$ steht; $R^6$ für $C_1$-$C_5$-Alkyl steht und $R^7$ für $C_1$-$C_5$-Alkyl steht.

3. Verfahren nach Anspruch 2, wobei das Amin der Formel (I) ausgewählt ist unter

4-(N,N-Dimethylamino)-2,2,6,6-tetramethylpiperidin und
4-(N,N-Diethylamino)-2,2,6,6-tetramethylpiperidin.

4. Verfahren nach Anspruch 1, wobei $R^5$ für $OR^{10}$ steht.

5. Verfahren nach Anspruch 4, wobei das Amin der Formel (I) ausgewählt ist unter

4-Hydroxy-2,2,6,6-tetramethylpiperidin,
4-Ethoxy-2,2,6,6-tetramethylpiperidin,
4-Propoxy-2,2,6,6-tetramethylpiperidin,
4-Butoxy-2,2,6,6-tetramethylpiperidin,
4-(2'-Hydroxyethoxy)-2,2,6,6-tetramethylpiperidin,
4-(3'-Hydroxypropoxy)-2,2,6,6-tetramethylpiperidin, und
4-(4'-Hydroxybutoxy)-2,2,6,6-tetramethylpiperidin.

6. Verfahren nach einem der Ansprüche 1 bis 5, wobei das Absorptionsmittel wenigstens ein organisches Lösungsmittel

umfasst.

7. Verfahren nach einem der Ansprüche 1 bis 6, wobei das Absorptionsmittel eine unter Phosphorsäure, Schwefelsäure, Ameisensäure, Essigsäure, Benzoesäure, Bernsteinsäure, Adipinsäure, Methansulfonsäure, p-Toluolsulfonsäure, 2-(4-(2-Hydroxyethyl)-1-piperazinyl)-ethansulfonsäure, 2-Hydroxyphosphonoessigsäure, 2-Phosphonobutan-1,2,4-tricarbonsäure, 1-Hydroxyethan-1,1-diphosphonsäure, Ethylendiamin-tetra-(methylenphosphonsäure), Diethylentriamin-penta(methylenphosphonsäure), Bis(hexamethylen)triamin-penta(methylenphosphonsäure) (HDTMP) und Nitrilo-tris(methylenphosphonsäure) ausgewählte Säure umfasst.

8. Verfahren nach einem der Ansprüche 1 bis 7, wobei das Absorptionsmittel ein tertiäres Amin oder stark sterisch gehindertes Amin umfasst, wobei unter einer starken sterischen Hinderung ein tertiäres Kohlenstoffatom in unmittelbarer Nachbarschaft zu einem primären oder sekundären Stickstoffatom verstanden wird.

9. Verfahren nach einem der Ansprüche 1 bis 8, wobei der Restgehalt an Kohlendioxid im behandelten Fluidstrom mindestens 0,5 Vol.-% beträgt.

10. Verfahren nach einem der Ansprüche 1 bis 9, wobei das beladene Absorptionsmittel mittels wenigstens einer der Maßnahmen Erwärmung, Entspannung und Strippen mit einem inerten Fluid regeneriert wird.

11. Verwendung eines Amins der Formel (I)

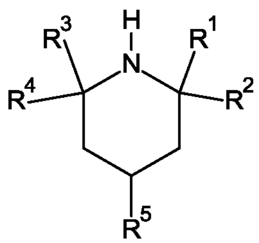

(I)

worin

$R^1$, $R^2$, $R^3$ und $R^4$ für Methyl stehen;
$R^5$ ausgewählt ist unter $NR^6R^7$ und $OR^{10}$;
$R^6$ ausgewählt ist unter $C_1$-$C_5$-Alkyl und $C_2$-$C_5$-Hydroxyalkyl und $R^7$ ausgewählt ist unter $C_1$-$C_5$-Alkyl und $C_2$-$C_5$-Hydroxyalkyl; und
$R^{10}$ ausgewählt ist unter Wasserstoff, $C_1$-$C_5$-Alkyl und $C_2$-$C_5$-Hydroxyalkyl;
zur selektiven Entfernung von Schwefelwasserstoff gegenüber Kohlendioxid aus einem Fluidstrom durch Inkontaktbringen des Fluidstroms mit einem das Amin der Formel (I) enthaltendem Absorptionsmittel in einem Absorber, wobei:

$$\frac{\frac{mol(H_2S)}{mol(CO_2)}\, im\ beladenen\ Absorptionsmittel\ am\ Sumpf\ des\ Absorbers}{\frac{mol(H_2S)}{mol(CO_2)}\, im\ Fluidstrom} > 1,$$

wobei das Absorptionsmittel eine wässrige Lösung ist und die Konzentration des Amins der Formel (I) in der wässrigen Lösung 10 bis 60 Gew.-% beträgt.

12. Verwendung nach Anspruch 11 in Kombination mit einem tertiären Amin und/oder stark sterisch gehindertem Amin, wobei unter einer starken sterischen Hinderung ein tertiäres Kohlenstoffatom in unmittelbarer Nachbarschaft zu einem primären oder sekundären Stickstoffatom verstanden wird.

13. Absorptionsmittel zur selektiven Entfernung von Schwefelwasserstoff gegenüber Kohlendioxid aus einem Fluidstrom, umfassend:

a) ein Amin der Formel (Ia)

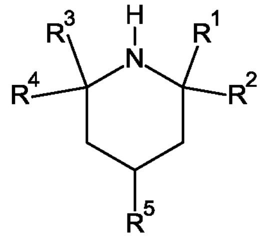

(Ia)

worin

$R^1$, $R^2$, $R^3$ und $R^4$ für Methyl stehen;
$R^5$ für $OR^{10}$ steht; und
$R^{10}$ ausgewählt ist unter Wasserstoff, $C_1$-$C_5$-Alkyl und $C_2$-$C_5$-Hydroxyalkyl; und

b) ein tertiäres Amin und/oder ein stark sterisch gehindertes Amin, wobei unter einer starken sterischen Hinderung ein tertiäres Kohlenstoffatom in unmittelbarer Nachbarschaft zu einem primären oder sekundären Stickstoffatom verstanden wird;
wobei das Absorptionsmittel eine wässrige Lösung ist und die Konzentration des Amins der Formel (Ia) in der wässrigen Lösung 10 bis 60 Gew.-% beträgt.

**14.** Absorptionsmittel nach Anspruch 13, umfassend
c) eine unter Phosphorsäure, Schwefelsäure, Ameisensäure, Essigsäure, Benzoesäure, Bernsteinsäure, Adipinsäure, Methansulfonsäure, p-Toluolsulfonsäure, 2-(4-(2-Hydroxyethyl)-1-piperazinyl)-ethansulfonsäure, 2-Hydroxyphosphonoessigsäure, 2-Phosphonobutan-1,2,4-tricarbonsäure, 1-Hydroxyethan-1,1-diphosphonsäure, Ethylendiamin-tetra-(methylenphosphonsäure), Diethylentriamin-penta(methylenphosphonsäure), Bis(hexamethylen)triamin-penta(methylenphosphonsäure) (HDTMP) und Nitrilo-tris(methylenphosphonsäure) ausgewählte Säure.

## Claims

**1.** A process for selectively removing hydrogen sulfide over carbon dioxide from a fluid stream, in which the fluid stream is contacted in an absorber with an absorbent comprising an amine of the formula (I)

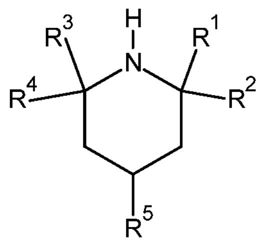

(I)

in which

$R^1$, $R^2$, $R^3$ and $R^4$ are methyl;
$R^5$ is selected from $NR^6R^7$ and $OR^{10}$;
$R^6$ is selected from $C_1$-$C_5$-alkyl and $C_2$-$C_5$-hydroxyalkyl and $R^7$ is selected from $C_1$-$C_5$-alkyl and $C_2$-$C_5$-hydroxyalkyl; and
$R^{10}$ is selected from hydrogen, $C_1$-$C_5$-alkyl and $C_2$-$C_5$-hydroxyalkyl;
wherein the absorbent is an aqueous solution and the concentration of the amine of the formula (I) in the aqueous solution is 10% to 60% by weight;
wherein a treated fluid stream and a laden absorbent are obtained;
wherein:

$$\frac{\frac{mol(H_2S)}{mol(CO_2)} \, in\ the\ laden\ absorbent\ at\ the\ bottom\ of\ the\ absorber}{\frac{mol(H_2S)}{mol(CO_2)} \, in\ the\ fluid\ stream} > 1.$$

2. The process according to claim 1, wherein $R^5$ is $NR^6R^7$;
$R^6$ is $C_1$-$C_5$-alkyl and $R^7$ is $C_1$-$C_5$-alkyl.

3. The process according to claim 2, wherein the amine of the formula (I) is selected from

4-(N,N-dimethylamino)-2,2,6,6-tetramethylpiperidine and
4-(N,N-diethylamino)-2,2,6,6-tetramethylpiperidine.

4. The process according to claim 1, wherein $R^5$ is $OR^{10}$.

5. The process according to claim 4, wherein the amine of the formula (I) is selected from

4-hydroxy-2,2,6,6-tetramethylpiperidine,
4-ethoxy-2,2,6,6-tetramethylpiperidine,
4-propoxy-2,2,6,6-tetramethylpiperidine,
4-butoxy-2,2,6,6-tetramethylpiperidine,
4-(2'-hydroxyethoxy)-2,2,6,6-tetramethylpiperidine,
4-(3'-hydroxypropoxy)-2,2,6,6-tetramethylpiperidine and
4-(4'-hydroxybutoxy)-2,2,6,6-tetramethylpiperidine.

6. The process according to any of claims 1 to 5, wherein the absorbent comprises at least one organic solvent.

7. The process according to any of claims 1 to 6, wherein the absorbent comprises an acid selected from phosphoric acid, sulfuric acid, formic acid, acetic acid, benzoic acid, succinic acid, adipic acid, methanesulfonic acid, p-toluenesulfonic acid, 2-(4-(2-hydroxyethyl)-1-piperazinyl)ethanesulfonic acid, 2-hydroxyphosphonoacetic acid, 2-phosphonobutane-1,2,4-tricarboxylic acid, 1-hydroxyethane-1,1-diphosphonic acid, ethylenediaminetetra(methylenephosphonic acid), diethylenetriaminepenta(methylenephosphonic acid), bis(hexamethylene)triaminepenta-(methylenephosphonic acid) (HDTMP) and nitrilotris-(methylenephosphonic acid).

8. The process according to any of claims 1 to 7, wherein the absorbent comprises a tertiary amine or highly sterically hindered amine, wherein high steric hindrance is understood to mean a tertiary carbon atom directly adjacent to a primary or secondary nitrogen atom.

9. The process according to any of claims 1 to 8, wherein the residual carbon dioxide content in the treated fluid stream is at least 0.5% by volume.

10. The process according to any of claims 1 to 9, wherein the laden absorbent is regenerated by means of at least one of the measures of heating, decompressing and stripping with an inert fluid.

11. The use of an amine of the formula (I)

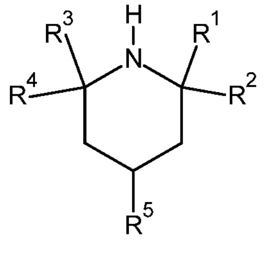

(I)

in which

$R^1$, $R^2$, $R^3$ and $R^4$ are methyl;
$R^5$ is selected from $NR^6R^7$ and $OR^{10}$;
$R^6$ is selected from $C_1$-$C_5$-alkyl and $C_2$-$C_5$-hydroxyalkyl and $R^7$ is selected from $C_1$-$C_5$-alkyl and $C_2$-$C_5$-hydroxyalkyl; and
$R^{10}$ is selected from hydrogen, $C_1$-$C_5$-alkyl and $C_2$-$C_5$-hydroxyalkyl;
for selective removal of hydrogen sulfide over carbon dioxide from a fluid stream by contacting the fluid stream in an absorber with an absorbent comprising the amine of the formula (I), wherein:

$$\frac{\frac{mol(H_2S)}{mol(CO_2)}\ in\ the\ laden\ absorbent\ at\ the\ bottom\ of\ the\ absorber}{\frac{mol(H_2S)}{mol(CO_2)}\ in\ the\ fluid\ stream} > 1,$$

wherein the absorbent is an aqueous solution and the concentration of the amine of the formula (I) in the aqueous solution is 10% to 60% by weight.

**12.** The use according to claim 11 in combination with a tertiary amine and/or highly sterically hindered amine, wherein high steric hindrance is understood to mean a tertiary carbon atom directly adjacent to a primary or secondary nitrogen atom.

**13.** An absorbent for selective removal of hydrogen sulfide over carbon dioxide from a fluid stream, comprising:

a) an amine of the formula (Ia)

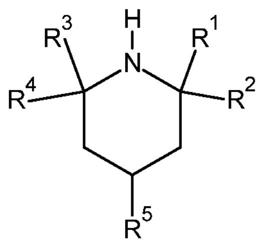

(Ia)

in which

$R^1$, $R^2$, $R^3$ and $R^4$ are methyl;
$R^5$ is $OR^{10}$; and
$R^{10}$ is selected from hydrogen, $C_1$-$C_5$-alkyl and $C_2$-$C_5$-hydroxyalkyl; and

b) a tertiary amine and/or a highly sterically hindered amine, wherein high steric hindrance is understood to mean a tertiary carbon atom directly adjacent to a primary or secondary nitrogen atom;
wherein the absorbent is an aqueous solution and the concentration of the amine of the formula (Ia) in the aqueous solution is 10% to 60% by weight.

**14.** The absorbent according to claim 13, comprising
c) an acid selected from phosphoric acid, sulfuric acid, formic acid, acetic acid, benzoic acid, succinic acid, adipic acid, methanesulfonic acid, p-toluenesulfonic acid, 2-(4-(2-hydroxyethyl)-1-piperazinyl)ethanesulfonic acid, 2-hydroxyphosphonoacetic acid, 2-phosphonobutane-1,2,4-tricarboxylic acid, 1-hydroxyethane-1,1-diphosphonic acid, ethylenediaminetetra-(methylenephosphonic acid), diethylenetriamine-penta(methylenephosphonic acid), bis(hexamethylene)triaminepenta(methylenephosphonic acid) (HDTMP) and nitrilotris(methylenephosphonic acid).

## Revendications

**1.** Procédé d'élimination sélective d'hydrogène sulfuré par rapport à du dioxyde de carbone dans un courant de fluide, dans lequel on met le courant de fluide en contact dans un absorbeur avec un absorbant, qui comprend une amine

de formule (I)

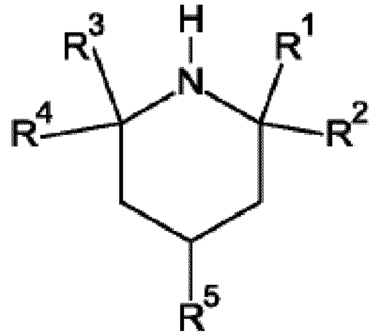

(I)

dans laquelle

$R^1$, $R^2$, $R^3$ et $R^4$ représentent un méthyle ;
$R^5$ est choisi parmi $NR^6R^7$ et $OR^{10}$;
$R^6$ est choisi parmi un alkyle en $C_1$-$C_5$ et un hydroxyalkyle en $C_2$-$C_5$ et $R^7$ est choisi parmi un alkyle en $C_1$-$C_5$ et un hydroxyalkyle en $C_2$-$C_5$ ; et
$R^{10}$ est choisi parmi l'hydrogène, un alkyle en $C_1$-$C_5$ et un hydroxyalkyle en $C_2$-$C_5$ ;
l'absorbant étant une solution aqueuse et la concentration de l'amine de formule (I) dans la solution aqueuse étant de 10 à 60 % en poids ;
avec obtention d'un courant de fluide traité et d'un absorbant chargé ;
avec :

$$\frac{\frac{mol(H_2S)}{mol(CO_2)} \text{ dans l'absorbant chargé au fond de l'absorbeur}}{\frac{mol(H_2S)}{mol(CO_2)} \text{ dans le courant de fluide}} > 1.$$

**2.** Procédé selon la revendication 1, dans lequel $R^5$ représente $NR^6R^7$ ; $R^6$ représente un alkyle en $C_1$-$C_5$ et $R^7$ représente un alkyle en $C_1$-$C_5$.

**3.** Procédé selon la revendication 2, dans lequel l'amine de formule (I) est choisie parmi la 4-(N,N-diméthylamino)-2,2,6,6-tétraméthylpipéridine et la 4-(N,N-diéthylamino)-2,2,6,6-tétraméthylpipéridine.

**4.** Procédé selon la revendication 1, dans lequel $R^5$ représente $OR^{10}$.

**5.** Procédé selon la revendication 4, dans lequel l'amine de formule (I) est choisie parmi

la 4-hydroxy-2,2,6,6-tétraméthylpipéridine,
la 4-éthoxy-2,2,6,6-tétraméthylpipéridine,
la 4-propoxy-2,2,6,6-tétraméthylpipéridine,
la 4-butoxy-2,2,6,6-tétraméthylpipéridine,
la 4-(2'-hydroxyéthoxy)-2,2,6,6-tétraméthylpipéridine,
la 4-(3'-hydroxypropoxy)-2,2,6,6-tétraméthylpipéridine, et
la 4-(4'-hydroxybutoxy)-2,2,6,6-tétraméthylpipéridine.

**6.** Procédé selon l'une des revendications 1 à 5, dans lequel l'absorbant comprend au moins un solvant organique.

**7.** Procédé selon l'une des revendications 1 à 6, dans lequel l'absorbant comprend un acide choisi parmi l'acide phosphorique, l'acide sulfurique, l'acide formique, l'acide acétique, l'acide benzoïque, l'acide succinique, l'acide adipique, l'acide méthanesulfonique, l'acide p-toluènesulfonique, l'acide 2-(4-(2-hydroxyéthyl)-1-pipérazinyl)-éthanesulfonique, l'acide 2-hydroxyphosphonoacétique, l'acide 2-phosphonobutane-1,2,4-tricarboxylique, l'acide 1-hydroxyéthane-1,1-diphosphonique, l'acide éthylènediamine-tétra-(méthylènephosphonique), l'acide diéthylènetriamine-penta(méthylènephosphonique), l'acide bis(hexaméthylène)triamine-penta(méthylènephosphonique) (HDTMP) et l'acide nitrilo-tris(méthylènephosphonique).

**8.** Procédé selon l'une des revendications 1 à 7, dans lequel l'absorbant comprend une amine tertiaire ou une amine à fort empêchement stérique, un fort empêchement stérique étant compris comme un atome de carbone tertiaire au voisinage immédiat d'un atome d'azote primaire ou secondaire.

**9.** Procédé selon l'une des revendications 1 à 8, dans lequel la teneur résiduelle en dioxyde de carbone dans le courant de fluide traité est d'au moins 0,5 % en volume.

**10.** Procédé selon l'une des revendications 1 à 9, dans lequel l'absorbant chargé est régénéré à l'aide d'au moins l'une des opérations chauffage, détente et épuisement avec un fluide inerte.

**11.** Utilisation d'une amine de formule (I)

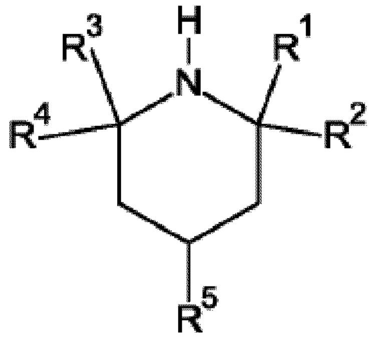

(I)

dans laquelle

$R^1$, $R^2$, $R^3$ et $R^4$ représentent un méthyle ;
$R^5$ est choisi parmi $NR^6R^7$ et $OR^{10}$;
$R^6$ est choisi parmi un alkyle en $C_1$-$C_5$ et un hydroxyalkyle en $C_2$-$C_5$ et $R^7$ est choisi parmi un alkyle en $C_1$-$C_5$ et un hydroxyalkyle en $C_2$-$C_5$ ; et
$R^{10}$ est choisi parmi l'hydrogène, un alkyle en $C_1$-$C_5$ et un hydroxyalkyle en $C_2$-$C_5$ ;
pour l'élimination sélective de sulfure d'hydrogène par rapport à du dioxyde de carbone à partir d'un courant de fluide par mise en contact du courant de fluide dans un absorbeur avec un absorbant contenant l'amine de formule (I), avec :

$$\frac{\frac{mol(H_2S)}{mol(CO_2)} \text{ dans l'absorbant chargé au fond de l'absorbeur}}{\frac{mol(H_2S)}{mol(CO_2)} \text{ dans le courant de fluide}} > 1,$$

l'absorbant étant une solution aqueuse et la concentration de l'amine de formule (I) dans la solution aqueuse étant de 10 à 60 % en poids.

**12.** Utilisation selon la revendication 11 en combinaison avec une amine tertiaire et/ou une amine à fort empêchement stérique, un fort empêchement stérique étant compris comme étant un atome de carbone tertiaire au voisinage immédiat d'un atome d'azote primaire ou secondaire.

**13.** Absorbant pour l'élimination sélective du sulfure d'hydrogène par rapport au dioxyde de carbone dans un courant de fluide, comprenant :

a) une amine de formule (Ia)

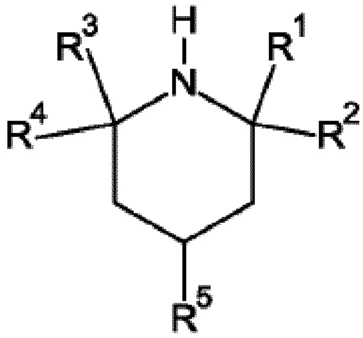

(Ia)

dans laquelle

$R^1$, $R^2$, $R^3$ et $R^4$ représentent un méthyle ;
$R^5$ représente $OR^{10}$ ; et
$R^{10}$ est choisi parmi l'hydrogène, un alkyle en $C_1$-$C_5$ et un hydroxyalkyle en $C_2$-$C_5$ ; et

b) une amine tertiaire et/ou une amine à fort empêchement stérique, un fort empêchement stérique étant compris comme étant un atome de carbone tertiaire au voisinage immédiat d'un atome d'azote primaire ou secondaire ; l'absorbant étant une solution aqueuse et la concentration de l'amine de formule (Ia) dans la solution aqueuse étant de 10 à 60 % en poids.

**14.** Absorbant selon la revendication 13, comprenant
c) un acide choisi parmi l'acide phosphorique, l'acide sulfurique, l'acide formique, l'acide acétique, l'acide benzoïque, l'acide succinique, l'acide adipique, l'acide méthanesulfonique, l'acide p-toluènesulfonique, l'acide 2-(4-(2-hydroxyéthyl)-1-pipérazinyl)-éthanesulfonique, l'acide 2-hydroxyphosphonoacétique, l'acide 2-phosphonobutane-1,2,4-tricarboxylique, l'acide 1-hydroxyéthane-1,1-diphosphonique, l'acide éthylènediamine-tétra-(méthylènephosphonique), l'acide diéthylènetriamine-penta(méthylènephosphonique), l'acide bis(hexaméthylène)triamine-penta(méthylènephosphonique) (HDTMP) et l'acide nitrilo-tris(méthylènephosphonique).

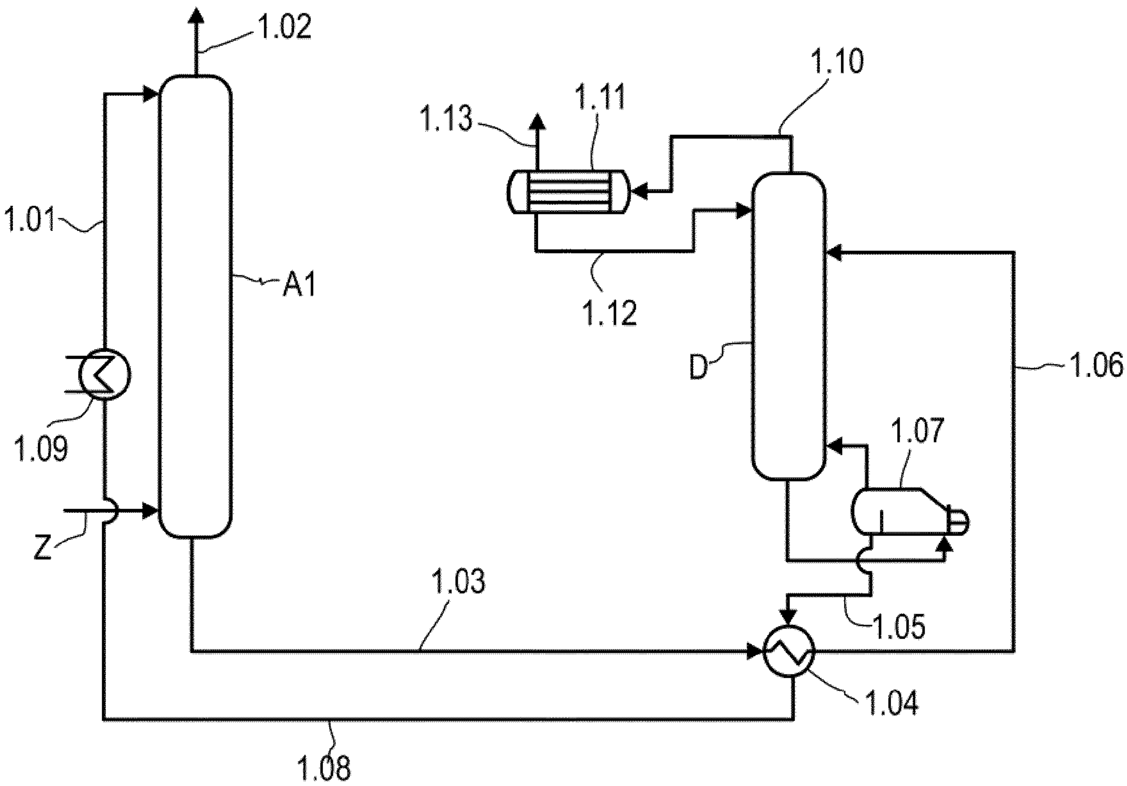


**Fig. 1**

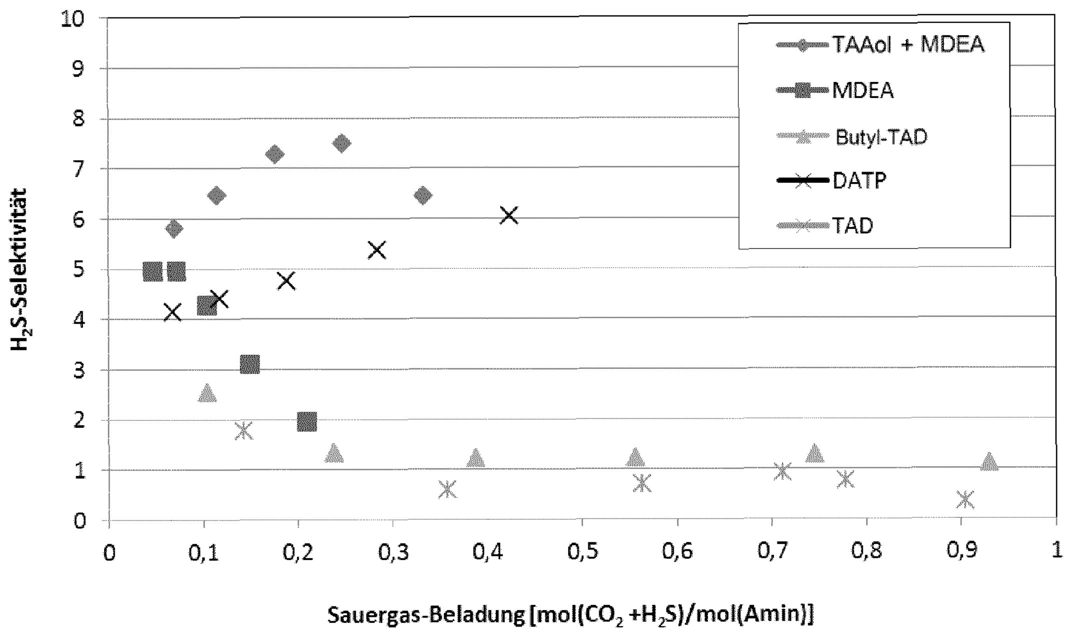
10
9
8
7
6
5
4
3
2
1
0
0
0,1
0,2
0,3
0,4
0,5
0,6
0,7
0,8
0,9
1
$H_2S$-Selektivität
Sauergas-Beladung [mol($CO_2$ +$H_2S$)/mol(Amin)]
TAAol + MDEA
MDEA
Butyl-TAD
DATP
TAD

# Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012062830 A1
- WO 2013167367 A1
- WO 2010089257 A1
- WO 2012168094 A1
- WO 2012168095 A1
- WO 2012168067 A1
- US 20050202967 A1
- US 20140079613 A1
- DE 102005043142 A1
- EP 0159495 A
- EP 0190434 A
- EP 0359991 A
- WO 00100271 A
- US 4537753 A
- US 4553984 A
- US 4537 A
- US 753 A
- US 4553 A
- US 984 A
- EP 0202600 A
- EP 0121109 A